# EUROPEAN PATENT SPECIFICATION

(11) **EP 4 299 844 B1**
(45) Date of publication and mention of the grant of the patent: **21.01.2026**
(21) Application number: 23178644.3
(22) Date of filing: 12.06.2023
(51) Int. Cl.: E02F 9/24, E02F 9/26

(54) **WORK MACHINE CONTROL METHOD, WORK MACHINE CONTROL PROGRAM, WORK MACHINE CONTROL SYSTEM, AND WORK MACHINE**
ARBEITSMASCHINENSTEUERUNGSVERFAHREN, ARBEITSMASCHINENSTEUERUNGSPROGRAMM, ARBEITSMASCHINENSTEUERUNGSSYSTEM UND ARBEITSMASCHINE
PROCÉDÉ DE COMMANDE D'ENGIN DE CHANTIER, PROGRAMME DE COMMANDE D'ENGIN DE CHANTIER, SYSTÈME DE COMMANDE D'ENGIN DE CHANTIER ET ENGIN DE CHANTIER

(30) Priority: 29.06.2022 JP 2022104220
(43) Date of publication of application: 03.01.2024
(73) Proprietor: Yanmar Holdings Co., Ltd., Osaka-shi, Osaka (JP)
(72) Inventor: OKAMOTO, Takanori, Fukuoka (JP); DEGUCHI, Takashi, Fukuoka (JP); TAMURA, Kazuki, Fukuoka (JP); DANGUCHI, Masashi, Fukuoka (JP); MOHAMAD, Amir Dawan, Fukuoka (JP)
(74) Representative: Novagraaf International SA

(56) References cited:
- EP-A1- 4 012 121
- DE-T5- 112020 002 281
- JP-A- 2021 042 548

## Description

### TECHNICAL FIELD

The present invention relates to a work machine control method, a work machine control program, a work machine control system that are used for a work machine that includes at least one drive unit, and a work machine.

### BACKGROUND ART

As a related technology, a work machine (construction machine) equipped with an obstacle detection device that detects detection targets (obstacles) in a monitoring area (monitoring area) set around a machine body is known (see, for example, Patent Document 1). In the work machine of the related technology, an electromagnetic proportional valve is provided in an oil path between a pilot pump and each remote control valve to regulate a pilot pressure in response to a control command from an integrated ECU. This work machine is capable of simultaneously stopping the drive of a plurality of drive units (hydraulic actuators) or uniformly controlling speeds thereof by adjusting the pilot pressure from the pilot pump. EP4012121A1 relates to a work machine and a periphery monitoring system. DE112020002281 relates to a construction machine and a control system for the construction machine. JP2021042548A relates to construction machinery.

In the work machine of the related technology, when a detection target is detected, the electromagnetic proportional valve is used to perform control to prohibit the drive of a predetermined drive unit (actuator) or to reduce the speed of a predetermined drive unit. Thereby, when a detection target (including a person) enters the monitoring area, the movement of the drive unit is limited, which makes it easier to avoid contact between the work machine and the detection target.

### PRIOR ART DOCUMENT

### PATENT DOCUMENT

Patent Document 1: Japanese Unexamined Patent Application Publication No. 2021-42548

### SUMMARY OF INVENTION

### TECHNICAL PROBLEM

In the above related technology, when an abnormality occurs in the electromagnetic proportional valve, the control to stop the drive unit or reduce the speed of the drive unit may not be performed correctly, and the movement of the drive unit may not be limited in situations where the movement of the drive unit should be limited, for example, when a detection target is being detected. As a result, the reliability of the movement of the work machine may be reduced.

An object of the present invention is to provide a work machine control method, a work machine control program, a work machine control system, and a work machine that can improve the reliability of the movement of the work machine.

### SOLUTION TO PROBLEM

The work machine control method according to an aspect of the present invention includes actuating a first limiting unit, determining whether or not the first limiting unit has an abnormality, and actuating a second limiting unit based at least on a determination result of determining whether or not the first limiting unit has an abnormality. The first limiting unit limits a movement of a drive unit that drives a work machine. The second limiting unit limits the movement of the drive unit separately from the first limiting unit.

A work machine control program according to an aspect of the present invention is a program that causes one or more processors to execute the above-mentioned work machine control method.

A work machine control system according to an aspect of the present invention includes a first limiting processor, a determination processor, and a second limiting processor. The first limiting processor controls a first limiting unit. The first limiting unit limits a movement of a drive unit that drives a work machine. The determination processor determines whether or not the first limiting unit has an abnormality. The second limiting processor controls the second limiting unit based at least on a determination result of determining whether or not the first limiting unit has an abnormality. The second limiting unit limits the movement of the drive unit separately from the first limiting unit.

A work machine according to one aspect of the present invention includes the work machine control system and a machine body on which the drive unit is installed.

### ADVANTAGEOUS EFFECTS OF INVENTION

According to the present invention, a work machine control method, a work machine control program, a work machine control system, and a work machine that can improve the reliability of movement of the work machine can be provided.

### BRIEF DESCRIPTION OF DRAWINGS

FIG. 1 is a perspective view schematically illustrating an overall configuration of a work machine according to a first embodiment.
FIG. 2 is a diagram schematically illustrating a hydraulic circuit and the like of the work machine according to the first embodiment.
FIG. 3 is a plan view schematically illustrating a monitoring area and the like set around the work machine according to the first embodiment viewed from above the work machine.
FIG. 4 is a schematic external view of a display device on which a display screen is displayed by a work machine control system according to the first embodiment.
FIG. 5 is a diagram illustrating an example of the display screen displayed by the work machine control system according to the first embodiment.
FIG. 6 is a diagram illustrating examples of display modes of a notification object in the display screen displayed by the work machine control system according to the first embodiment.
FIG. 7 is a flowchart illustrating an operation example of the work machine control system according to the first embodiment.
FIG. 8 is a diagram schematically illustrating a hydraulic circuit and the like of the work machine according to a second embodiment.

### DESCRIPTION OF EMBODIMENTS

Embodiments of the present invention will be described below with reference to the accompanying drawings. The following embodiments are embodied examples of the present invention and are not intended to limit the technical scope of the present invention.

### (First Embodiment)

### [1] Overall Configuration

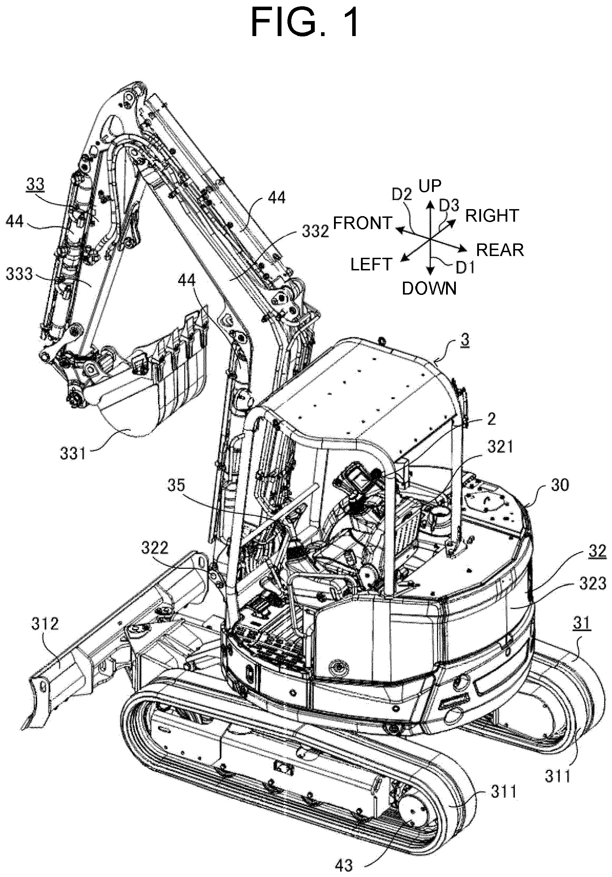

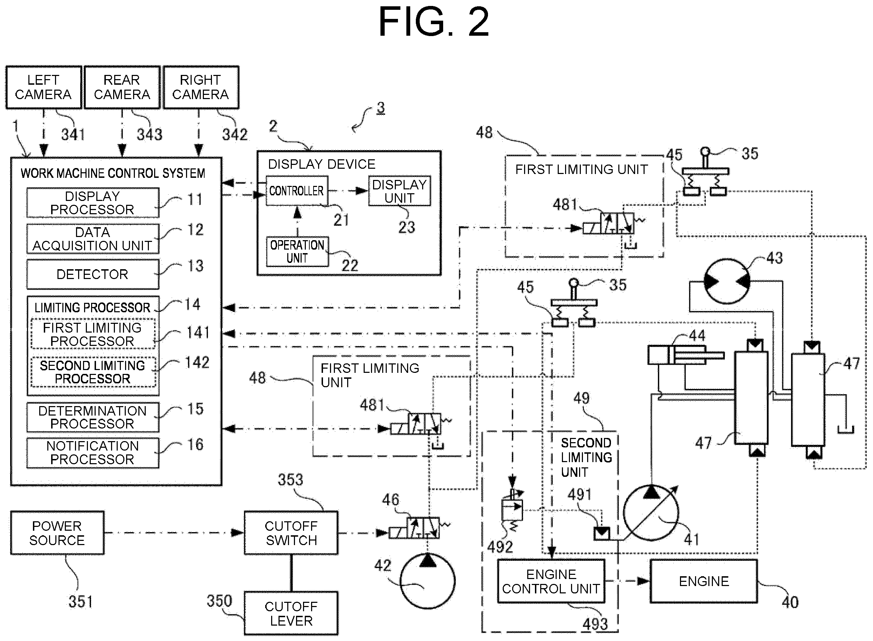

A work machine 3 according to the present embodiment includes a machine body 30 provided with a traveling part 31, a swivel part 32, and a work part 33, as illustrated in FIG. 1. The work machine 3 further includes a work machine control system 1 (hereinafter, simply referred to as a "control system 1"), as illustrated in FIG. 2. In addition, the machine body 30 further includes a display device 2 and an operation device 35.

The "work machine" referred to in the present disclosure refers to a machine for various types of work, and is, as an example, a work vehicle, such as a backhoe (including a hydraulic excavator and a mini excavator), a wheel loader and a carrier. The work machine 3 includes the work part 33 configured to be capable of performing one or more types of work including at least lifting work. The work machine 3 is not limited to a "vehicle" but may be, for example, a work vessel or a flying work body, such as a drone or a multicopter. Furthermore, the work machine 3 is not limited to a construction machine (construction equipment), but may also be an agricultural machine (agricultural equipment), such as a rice transplanter, a tractor, or a combine harvester. In the present embodiment, unless otherwise specified, a case where the work machine 3 is a backhoe with a lifting function (with a crane function) and can perform excavation work, ground leveling work, trenching work, or loading work as well as lifting work is taken as an example.

Moreover, for convenience of explanation, a vertical direction in a state where the work machine 3 is usable is defined as an up-down direction D1 in the present embodiment. Furthermore, a front-rear direction D2 and a left-right direction D3 are each defined based on a direction viewed from a user (operator) seated on (a driving part 321 of) the work machine 3 in a non-swiveling state of the swivel part 32. In other words, each of the directions used in the present embodiment is a direction defined based on the machine body 30 of the work machine 3, and a direction in which the machine body 30 moves at the time of the work machine 3 moving forward is referred to as "front", and a direction in which the machine body 30 moves at the time of the work machine 3 moving rearward is referred to as "rear". Similarly, a direction in which a front end portion of the machine body 30 moves at the time of the work machine 3 turning to right is referred to as "right", and a direction in which the front end portion of the machine body 30 moves at the time of the work machine 3 turning to left is referred to as "left". However, these directions are not intended to limit a use direction (direction in use) of the work machine 3.

The work machine 3 is provided with an engine 40 (see FIG. 2) that serves as a power source. In the work machine 3, the engine 40 drives a hydraulic pump 41 (see FIG. 2), for example, and hydraulic oil is supplied from the hydraulic pump 41 to hydraulic actuators (including a hydraulic motor 43 and a hydraulic cylinder 44) of each part of the machine body 30, thereby to drive the machine body 30. The work machine 3 is controlled, for example, by the user (operator), who is seated in the driving part 321 of the machine body 30, operating an operation lever and the like of the operation device 35 provided in the driving part 321.

It is assumed in the present embodiment that the work machine 3 is a passenger-use backhoe as described above, and therefore, the work part 33 is driven in accordance with an operation by the user (operator) seated in the driving part 321 so as to perform work such as excavation work. The driving part 321 in which the user is seated is provided at the swivel part 32.

The traveling part 31 has a traveling function, and is so configured as to be capable of traveling (including turning) on the ground. The traveling part 31 includes, for example, a pair of right and left crawlers 311 and a blade 312. The traveling part 31 further includes the hydraulic motor 43 (hydraulic actuator) for traveling to drive the crawlers 311.

The swivel part 32 is disposed above the traveling part 31, and is so configured as to be swivelable, relative to the traveling part 31, about a rotation shaft along the vertical direction. The swivel part 32 has a hydraulic motor (hydraulic actuator) for swiveling, and the like. The swivel part 32 includes, in addition to the driving part 321, the engine 40 and the hydraulic pump 41. At a front end portion of the swivel part 32, there is provided a boom bracket 322 to which the work part 33 is attached.

The work part 33 is so configured as to be capable of performing work, including lifting work. The work part 33 is supported by the boom bracket 322 of the swivel part 32, and performs work. The work part 33 includes a bucket 331, a boom 332, and an arm 333. The work part 33 further includes hydraulic actuators (including the hydraulic cylinder 44 and a hydraulic motor) for driving each portion.

The bucket 331 is a type of attachment (work instrument) that is attached to the machine body 30 of the work machine 3, and that is composed of an optional instrument selected from among a plurality of types of attachments according to content of the work. The bucket 331, as an example, is removably attached to the machine body 30 and is replaced according to the content of the work. In addition to the bucket 331, attachments for the work machine 3 include various instruments, such as a breaker, an auger, a crusher, a fork, a fork claw, a steel cutter, an asphalt cutter, a mower, and a ripper, a mulcher, a tilt rotator, and a tamper. The work part 33 performs work by driving the bucket 331 with power from the driving device.

The boom 332 is supported by the boom bracket 322 of the swivel part 32 in a rotatable manner. Specifically, the boom 332 is supported at the boom bracket 322 in a rotatable manner about a rotation shaft along a horizontal direction. The boom 332 is so shaped as to extend upward from a base end portion supported by the boom bracket 322. The arm 333 is coupled to a tip end of the boom 332. The arm 333 is supported to the boom 332 in a rotatable manner about a rotation shaft along the horizontal direction. The bucket 331 is attached to a tip end of the arm 333.

The work part 33 moves under power from the engine 40 as the power source. Specifically, the engine 40 drives the hydraulic pump 41 thereby to supply hydraulic oil from the hydraulic pump 41 to the hydraulic actuator (hydraulic cylinder 44 or the like) of the work part 33, thereby to move each of the portions (bucket 331, boom 332, and arm 333) of the work part 33.

In the present embodiment, the work part 33, in particular, has an articulated configuration in which the boom 332 and the arm 333 are individually rotatable. That is, the boom 332 and the arm 333 rotate about the respective rotation shafts extending along the horizontal direction so that the articulated work part 33 including the boom 332 and the arm 333 is capable of performing extending and folding movements as a whole.

Each of the traveling part 31 and the swivel part 32, as well as the work part 33, moves by receiving power from the engine 40 as the power source. In other words, hydraulic oil is supplied from the hydraulic pump 41 to the hydraulic motor 43 of the traveling part 31, a hydraulic motor of the swivel part 32, and the like, thereby to move the swivel part 32 and the traveling part 31.

The engine 40 functions as a power source that supplies power to each part as described above. Here, the engine 40 as well as the hydraulic pump 41 and the like are installed in the swivel part 32. As an example in the present embodiment, the engine 40 is a diesel engine. The engine 40 is driven by fuel (herein, light oil) supplied from a fuel tank.

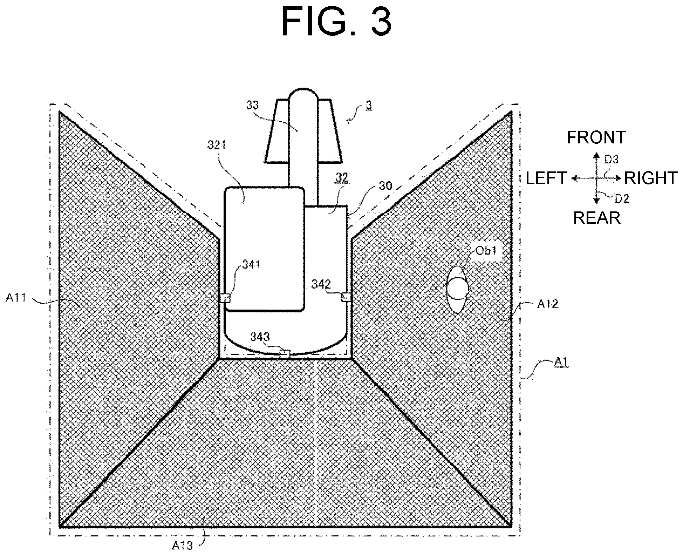

Here, the machine body 30 is provided with various types of sensors (including cameras) that detect a detection target Ob1 (see FIG. 3) in a monitoring area A1 (see FIG. 3) around the work machine 3, such as a camera for capturing an image around the machine body 30. As an example in the present embodiment, as illustrated in FIG. 3, a plurality of cameras (herein, three cameras), including a left camera 341, a right camera 342, and a rear camera 343, are installed on the swivel part 32 of the machine body 30. The left camera 341, the right camera 342, and the rear camera 343 are connected to a control system 1 and output, to the control system 1, images captured by each of the cameras. FIG. 3 is a plan view of the work machine 3 viewed from above, schematically illustrating the monitoring area A1 set around the work machine 3, the detection target Ob1, and the machine body 30 of the work machine 3 (including the left camera 341, the right camera 342, and the rear camera 343).

The left camera 341, the right camera 342, and the rear camera 343 are placed to face left, right, and rear, respectively, based on the driving part 321 so as to capture images of the monitoring area A1 on left, right, and rear viewed from the operator seated in the driving part 321 of the swivel part 32. In other words, as illustrated in FIG. 3, the monitoring area A1 includes a plurality of (herein, three) small areas A11, A12, and A13, and the left camera 341 captures an image of the small area A11 (left area) which is on the left as seen from the operator seated in the driving part 321. Similarly, the right camera 342 captures an image of the small area A12 (right area) which is on the right as seen from the operator seated in the driving part 321, and the rear camera 343 captures an image of the small area A13 (rear area) which is at the rear as seen from the operator seated in the driving part 321. This enables the left camera 341, the right camera 342, and the rear camera 343 to cover the both sides (left and right) and the rear which are often blind spots for the operator.

In FIG. 2, a hydraulic circuit and an electric circuit (electric connections) of the work machine 3 according to the present embodiment are schematically illustrated. In FIG. 2, solid lines represent high-pressure oil paths (for hydraulic oil), dotted lines represent low-pressure oil paths (for pilot oil), and dashed-dotted line arrows represent electric signal paths. In addition, a thick (solid) line between a cutoff lever 350 and a cutoff switch 353 represents a physical connection between the cutoff lever 350 and the cutoff switch 353.

As illustrated in FIG. 2, the work machine 3 includes a pilot pump 42, a remote control valve 45, a control valve 46, a direction switching valve (control valve) 47, a first limiting unit 48, and a second limiting unit 49, in addition to the hydraulic pump 41, the hydraulic motor 43, and the hydraulic cylinder 44. The work machine 3 is further equipped with a power source 351, the cutoff lever 350 and the cutoff switch 353 and the like. In FIG. 2, only the hydraulic motor 43 of the traveling part 31 is illustrated, but the same hydraulic circuit is configured also for the hydraulic motor of the swivel part 32. Further, in FIG. 2, only one hydraulic cylinder 44 for driving the boom 332 is illustrated; however, the same hydraulic circuit is configured also for the hydraulic cylinder 44 for driving the arm 333 or the bucket 331, etc.

The hydraulic oil from the hydraulic pump 41 driven by the engine 40 is supplied to the hydraulic motor 43 of the traveling part 31, the hydraulic motor of the swivel part 32, the hydraulic cylinder 44 of the work part 33, and the like. In this way, the hydraulic actuators such as the hydraulic motor 43 and the hydraulic cylinder 44 are driven.

Each of the hydraulic actuators, such as the hydraulic motor 43 and the hydraulic cylinder 44, includes a pilot-type direction switching valve 47 capable of changing a direction and a flow rate of the hydraulic oil supplied from the hydraulic pump 41. The direction switching valve 47 is driven when the pilot oil serving as an input instruction is supplied from the pilot pump 42.

Here, a remote control valve 45 is provided, for example, in a supply path of the pilot oil to the direction switching valve 47 corresponding to the hydraulic motor 43 of the traveling part 31. The remote control valve 45 outputs a travel operation instruction of the traveling part 31 in response to an operation of the operation device 35 (operation lever). The travel operation instruction instructs a travel movement (for example, forward movement or backward movement) of the traveling part 31.

Similarly, a remote control valve 45 is also provided in a supply path of the pilot oil to a direction switching valve corresponding to the hydraulic cylinder 44 of the work part 33. This remote control valve 45 outputs a work operation instruction of the work part 33 in response to the operation of the operation device 35 (operation lever). The work operation instruction instructs an expanding movement, a contracting movement and the like of the work part 33. Further, a remote control valve is also provided in a supply path of the pilot oil to a direction switching valve corresponding to the hydraulic motor of the swivel part 32. This remote control valve outputs a swivel operation instruction of the swivel part 32 in response to the operation of the operation device 35 (operation lever). The swivel operation instruction instructs a swivel movement (for example, left swivel or right swivel) of the swivel part 32.

Furthermore, the supply path of the pilot oil to each of the direction switching valves 47 is provided with the first limiting unit 48. The first limiting unit 48 has a first control valve 481. The first control valves 481 are each an electromagnetic control valve (solenoid valve), and are each inserted serially between the remote control valve 45 and the pilot pump 42. Each of the first control valves 481 is connected to the control system 1 and operates in response to a control signal (supply current) from the control system 1 to adjust the flow rate of the pilot oil supplied from the pilot pump 42 to the remote control valve 45. In the present embodiment, the first limiting unit 48 can shut off the flow path of the pilot oil supplied to the remote control valve 45 by closing at least the first control valve 481, thereby stopping the supply of the hydraulic oil from the hydraulic pump 41 to the hydraulic actuators (hydraulic motor 43 and hydraulic cylinder 44, etc.) corresponding to the remote control valve 45. A hydraulic actuator to which the supply of the hydraulic oil from the hydraulic pump 41 has stopped is disabled, and such a hydraulic actuator is forcibly stopped regardless of the operation of the operation device 35.

Such direction switching valve 47, remote control valve 45, and first limiting unit 48 are not only provided for a hydraulic circuit of the hydraulic motor 43 of the traveling part 31 and the hydraulic cylinder 44 for driving the boom 332, but also for a hydraulic circuit of the hydraulic motor of the swivel part 32 and the hydraulic cylinder 44 for driving the arm 333 or the bucket 331, etc. Thus, according to the operation device 35's operation, the traveling part 31, the swivel part 32, and the work part 33 can be moved.

Furthermore, the control valve 46 as a cutoff valve is provided upstream of the pilot oil as seen from the first limiting unit 48 (first control valve 481). The control valve 46 includes an (electromagnetic) proportional control valve, and is inserted to between the pilot pump 42 and a plurality of the first control valves 481. The control valve 46 is connected via the cutoff switch 353 to the power source 351, and operates according to the current supplied from the power source 351. Here, the control valve 46 shuts off the flow path of the pilot oil in an energized state, i.e., in a state of a current as the control signal being supplied, and opens the flow path of the pilot oil in a de-energized state, i.e., in a state of the current as the control signal being cut off. Therefore, supplying of the supply current to the control valve 46 makes the hydraulic actuator (such as hydraulic cylinder 44) disabled, thus forcibly stopping the hydraulic actuator, regardless of the operation device 35's operation.

The cutoff switch 353 is interlocked with the cutoff lever 350. The cutoff lever 350 is placed at the driving part 321 of the machine body 30, and receives an operation input by the user (operator). As an example in the present embodiment, the cutoff lever 350 can be operated along the up-down direction D1. When the cutoff lever 350 is at a "raised position" which is an upper end position in a movable range, the cutoff switch 353 is "on"; when the cutoff lever 350 is at a "lowered position" which is a lower end position in the movable range, the cutoff switch 353 is "off". Then, the cutoff switch 353 is connected to the control system 1, and the cutoff switch 353's on or off is monitored by the control system 1.

Therefore, when the cutoff lever 350 is in the "lowered position", the control valve 46 is brought in the de-energized state, thus driving the hydraulic actuator (such as hydraulic cylinder 44) by the operation device 35's operation. In contrast, when the cutoff lever 350 is in the "raised position", the control valve 46 is brought in the energized state, thus forcibly stopping the hydraulic actuator regardless of the operation device 35's operation. Therefore, so as to drive the hydraulic actuator (such as hydraulic motor 43), the user (operator) needs to operate the cutoff lever 350 to the "lowered position".

Further, each of the traveling part 31, the swivel part 32, and the work part 33 also moves when the hydraulic oil is supplied from the hydraulic pump 41 to the hydraulic actuators (hydraulic motor 43 and hydraulic cylinder 44, etc.); therefore, the cutoff lever 350 being in the "raised position" makes the traveling part 31, the swivel part 32, and the work part 33 disabled. That is, when the cutoff lever 350 is in the "raised position", the traveling part 31, the swivel part 32, and the work part 33 are all forcibly disabled.

In short, the cutoff switch 353, when being on, is in a "locked state" in which the work machine 3's movement is limited (including prohibition), and when being off, is in an "unlocked state" in which the work machine 3's movement is not limited. Then, the cutoff lever 350 being in the "raised position" and the cutoff switch 353 being in the locked state (on) forcibly limit the work machine 3's movement regardless of the operation device 35's operation. The cutoff lever 350 is the lever operated so as to lock the work machine 3's movement in the above manner, and is synonymous with a gate lock lever. Further, the first control valve 481 and the control valve 46, in the present embodiment, are each assumed to be a (electromagnetic) proportional control valve, but can also be a switchable open/close valve that opens/shuts off the flow path, for example.

In addition, the flow rate of the hydraulic oil supplied from the hydraulic pump 41 is not fixed, and can be changed (variable) by a proper measure. The work machine 3 according to the present embodiment is provided with the second limiting unit 49, making it possible to adjust the flow rate of the hydraulic oil by the second limiting unit 49. As an example in the present embodiment, the hydraulic pump 41 includes a variable displacement pump that can change the amount of the hydraulic oil discharged per revolution of a drive shaft.

The second limiting unit 49 has a control signal input port 491, an electromagnetic proportional valve 492, and an engine control unit 493. The control signal input port 491 is a port where a control signal is input so as to adjust a discharge rate (flow rate) of the hydraulic oil of the hydraulic pump 41 composed of the variable displacement type pump. Specifically, the pilot oil which serves as the control signal is supplied from the pilot pump 42 to the control signal input port 491, and the hydraulic oil discharge rate of the hydraulic pump 41 changes according to the supply rate (pilot pressure) of the pilot oil. The electromagnetic proportional valve 492 is an electromagnetic proportional control valve provided on the pilot oil's supply path to the control signal input port 491, and adjusts the pilot pressure input to the control signal input port 491. The electromagnetic proportional valve 492 is electrically connected to the control system 1, and according to the control signal (supply current) from the control system 1, adjusts the pilot pressure input to the control signal input port 491, thereby to change the hydraulic oil discharge rate of the hydraulic pump 41. The engine control unit 493 controls the speed of the engine 40. That is, the engine control unit 493 controls the speed of the hydraulic pump 41, thereby to change the hydraulic oil discharge rate of the hydraulic pump 41.

Thus, the second limiting unit 49 controls at least one of the flow rate of the hydraulic pump 41 that supplies the hydraulic oil, the speed of the engine 40 that drives the hydraulic pump 41, and the pilot pressure, thereby making it possible to adjust the flow rate of the hydraulic oil discharged from the hydraulic pump 41. The second limiting unit 49 may, without steps, continuously vary the flow rate of the hydraulic oil discharged from the hydraulic pump 41, or may vary the flow rate at steps (for example, 2, 5, or 10 steps). In the present embodiment, the second limiting unit 49 can shut off the flow path of the pilot oil supplied to the control signal input port 491 by closing at least the electromagnetic proportional valve 492, thereby stopping the supply of the hydraulic oil from the hydraulic pump 41. When the supply of the hydraulic oil from hydraulic pump 41 stops, the hydraulic actuators such as the hydraulic motor 43 of the traveling part 31, the hydraulic motor of the swivel part 32, and the hydraulic cylinder 44 of the work part 33 all stop.

The control system 1 is mainly configured by a computer system having one or more processors such as a Central Processing Unit (CPU) and one or more memories such as a Read Only Memory (ROM) and a Random Access Memory (RAM), executing various processes (information process). In the present embodiment, the control system 1 is an integrated control unit that controls the overall work machine 3, and includes, for example, an electronic control unit (ECU). However, the control system 1 may be provided separately from the integrated controller. The control system 1 will be described in detail in the column "[2] Configuration of Control System".

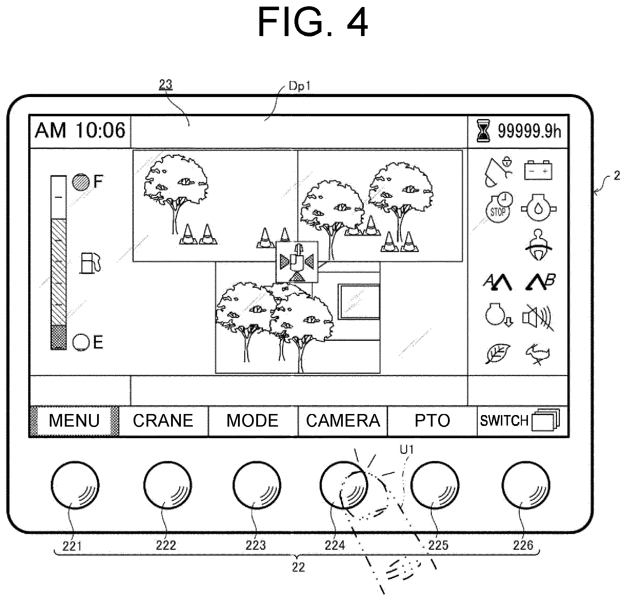

The display device 2 is placed at the driving part 321 of the machine body 30 and is a user interface for receiving an operation input by the user (operator) and outputting various information to the user. The display device 2 outputs an electric signal that accords to the operation by the user, for example, thereby to receive various operations by the user. Accordingly, the user (operator) can view a display screen Dp1 (see FIG. 4) displayed on the display device 2, and also can operate the display device 2 as necessary.

As illustrated in FIG. 2, the display device 2 includes a controller 21, an operation unit 22, and a display unit 23. The display device 2 is so configured as to be communicable with the control system 1, and can execute sending and receiving of data to and from the control system 1. As an example in the present embodiment, the display device 2 is a dedicated device used in the work machine 3.

The controller 21 controls the display device 2 in accordance with data from the control system 1. Specifically, the controller 21 outputs the electric signal that accords to the user's operation received by the operation unit 22, and displays, on the display unit 23, the display screen Dp1 generated by the control system 1.

The operation unit 22 is a user interface for receiving an operation input by the user (operator) to the display screen Dp1 displayed on the display unit 23. The operation unit 22 outputs the electric signal that accords to an operation of a user U1 (see FIG. 4), for example, thereby to receive various operations by the user U1. As an example in the present embodiment, the operation unit 22 includes a plurality of (herein, six) mechanical push button switches 221 to 226, as illustrated in FIG. 4. Along a periphery of a display area of the display unit 23, the plurality of push button switches 221 to 226 are placed in the vicinity of the display area (a lower portion in the example in FIG. 4). The plurality of push button switches 221 to 226 are associated with after-described items displayed on the display screen Dp1; operating any of the plurality of push button switches 221 to 226 operates (selects) any of the items on the display screen Dp1.

Furthermore, the operation unit 22 may include a touch panel and an operation dial. Also in this case, any of the items displayed on the display screen Dp1 is operated (selected) by an operation performed on the operation unit 22.

The display unit 23 is a user interface for displaying information to the user U1 (operator), such as a liquid crystal display or an organic EL display that displays various types of information. The display unit 23 presents various types of information to the user by means of display. As an example in the present embodiment, the display unit 23 is a full-color liquid crystal display with a backlight and has a "horizontally-long" display area that is long in a transverse direction as illustrated in FIG. 4.

The display device 2 presents various information on the display screen Dp1 to the user U1 (operator) who operates the work machine 3. In other words, the user U1 who operates the work machine 3 can visually obtain various information related to the work machine 3 by viewing the display screen Dp1 displayed on the display device 2. As an example, the display device 2 displays information on an operating state of the work machine 3, such as a cooling water temperature and a hydraulic oil temperature, so that the user U1 can check, at the display device 2, the information that is necessary for operating the work machine 3 and that is on the operating state of the work machine 3. The display device 2 can also display on the display screen Dp1 images of the areas around the work machine 3 (images of the monitoring area A1) captured by the left camera 341, the right camera 342, and the rear camera 343. Thus, when operating the work machine 3, the user U1 (operator) can check, on the display screen Dp1 displayed on the display device 2, the situations at the work machine 3's sides and rear which are likely to be blind spots from the driving part 321, for example.

In addition to the above-mentioned components, the machine body 30 further includes a sound output unit (including a buzzer or speaker, etc.), a communication terminal, a fuel tank and a battery. The machine body 30 further includes sensors to monitor an operating condition of the machine body 30, such as a cooling water temperature sensor, a hydraulic oil temperature sensor, a tachometer that measures an engine speed, and an hour meter that measures an operating time.

### [2] Configuration of Control System

Next, a configuration of the control system 1 according to the present embodiment will be described with reference to FIG. 2. The control system 1 controls each part of the machine body 30 (including the traveling part 31, the swivel part 32, and the work part 33). In the present embodiment, as mentioned above, the machine body 30 of the work machine 3 is mounted with the hydraulic actuators such as the hydraulic motor 43 of the traveling part 31, the hydraulic motor of the swivel part 32, and the hydraulic cylinder 44 of the work part 33 as "drive units" for driving the work machine 3. The control system 1 is a component of the work machine 3, and is included in the work machine 3 together with the machine body 30 and the like. In other words, the work machine 3 according to the present embodiment includes at least the control system 1 and a machine body 30 (including the traveling part 31, the swivel part 32, and the work part 33) on which the drive units (hydraulic actuators such as the hydraulic motor 43 and the hydraulic cylinder 44) are mounted.

As illustrated in FIG. 2, the control system 1 includes a display processor 11, a data acquisition unit 12, a detector 13, a limiting processor 14, a determination processor 15, and a notification processor 16. As an example in the present embodiment, the control system 1 is mainly constituted by a computer system having one or more processors, and the plurality of functional units (display processor 11 and the like) are realized when the one or more processors execute a work machine control program. The plurality of functional units included in the control system 1 may be distributed to a plurality of housings or may be included in a single housing.

The control system 1 is so configured as to be communicable with devices included in each part of the machine body 30. This means that, to the control system 1, at least the first limiting unit 48 (first control valve 481), the second limiting unit 49 (electromagnetic proportional valve 492 and engine control unit 493), the left camera 341, the right camera 342, the rear camera 343 and the display device 2 and the like are connected. This enables the control system 1 to control the first limiting unit 48, the second limiting unit 49, the display device 2 and the like, and to acquire the images captured by the left camera 341, the right camera 342, the rear camera 343 and the like. Here, the control system 1 may send and receive various types of information (data) directly to and from each device, or indirectly through a repeater or the like.

The display processor 11 executes a display process of displaying, on the display device 2, the display screen Dp1 including information related to the work machine 3. Specifically, the display processor 11 generates the display screen Dp1 based on data and the like acquired by the data acquisition unit 12, and controls the display device 2 so as to display the display screen Dp1 on the display unit 23 of the display device 2. Furthermore, the display processor 11 operates in response to an operation received by the operation unit 22 of the display device 2.

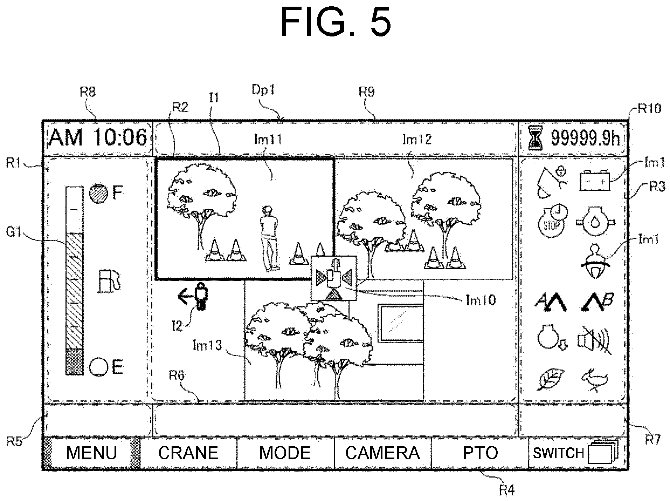

Here, the information related to the work machine 3 included in the display screen Dp1 includes operating information on the operating state of the work machine 3, for example, the remaining amount of fuel, the cooling water temperature, the hydraulic oil temperature, and suspended weight during lifting work, and the like. In other words, the display processor 11 can display, on the display device 2, the display screen Dp1 that includes operating information on the operating state of the work machine 3. Furthermore, the information related to the work machine 3 included in the display screen Dp1 displays, on the display screen Dp1, captured images Im11, Im12, and Im13 (see FIG. 5) captured by the left camera 341, right camera 342 and rear camera 343. In other words, the display processor 11 can display on the display device 2 the display screen Dp1 including the captured images Im11, Im12, and Im13 of the monitoring area A1 (respective small areas A11, A12, and A13) around the work machine 3.

A "screen", such as the display screen Dp1 in the present disclosure, refers to an image (picture) displayed on the display device 2 and includes graphic images, figures, photographs, text, and moving images. That is, the control system 1 can display, on the display device 2, the display screen Dp1 including a graphic image representing information on the operating state of the work machine 3, such as the cooling water temperature and the hydraulic oil temperature, for example. Here, when the display screen Dp1 includes a moving image or the like, the display screen Dp1 does not include a constant image but includes an image that changes from moment to moment.

The data acquisition unit 12 executes a data acquisition process of acquiring various data related to the work machine 3, such as the captured image of the monitoring area A1 around the work machine 3. In the present embodiment, the data acquisition unit 12 regularly or irregularly acquires outputs of the left camera 341, the right camera 342 and the rear camera 343 from the left camera 341, the right camera 342 and the rear camera 343. In other words, the data acquisition unit 12 acquires image data (captured images) of the monitoring area A1 (respective small areas A11, A12, and A13) around the work machine 3.

Furthermore, the data acquisition unit 12 can regularly or irregularly acquire information on the movement state of each part of the work machine 3, including at least the first limiting unit 48 (first control valve 481), through the data acquisition process. Here, the data acquisition unit 12 can also acquire outputs (sensor signals) of a remaining fuel amount sensor, a cooling water temperature sensor, and a hydraulic oil temperature sensor. The data acquisition unit 12 may acquire various types of data directly from various sensors and the like (including cameras), or indirectly through an electronic control unit or the like. The data acquired by the data acquisition unit 12 is stored in a memory, for example.

The detector 13 detects the detection target Ob1 in the monitoring area A1 around the work machine 3. In other words, the detector 13 determines presence or absence (existence or nonexistence) of the detection target Ob1 in the monitoring area A1, and outputs a detection result indicating whether or not the detection target Ob1 is present in the monitoring area A1. As an example in the present embodiment, the detection target Ob1 is a "person". In other words, when a "person" enters the monitoring area A1 around the work machine 3 as a result of a movement of the work machine 3 or a movement of the "person" around the work machine 3, the detector 13 detects the "person" as the detection target Ob1. When a plurality of detection targets Ob1 are present in the monitoring area A1, the detector 13 may also detect the number of detection targets Ob1 (the number of persons).

In the present embodiment, the detector 13 detects the detection target Ob1 in the monitoring area A1 based on outputs (image data) of the left camera 341, the right camera 342, and the rear camera 343. Specifically, the detector 13 extracts a feature value in an image by performing the image process on the image data acquired by the data acquisition unit 12, and determines whether or not the detection target Ob1 ("person" in the present embodiment) is reflected in the image based on the feature value. Here, when the detection target Ob1 is reflected in the image, the detector 13 determines the detection target Ob1 is reflected in the image captured by which of the left camera 341, the right camera 342 and the rear camera 343. In other words, the detector 13 distinguishes that the detection target Ob1 is present in which of the small area A11 captured by the left camera 341, the small area A12 captured by the right camera 342, and the small area A13 captured by the rear camera 343, thereby to detect the detection target Ob1.

Furthermore, in the present embodiment, the detector 13 can also detect a distance from the machine body 30 to the detection target Ob1. In other words, when the detection target Ob1 is reflected in the image, the detector 13 calculates the distance from the machine body 30 to the detection target Ob1 based on the position of the detection target Ob1 on the image. Therefore, the detector 13 can detect, for example, the detection target Ob1 that is present within a certain distance (e.g., 2 m, 3 m, 4 m or 5 m, etc.) from the machine body 30. In other words, the detector 13 can not only detect an entire area captured by the left camera 341, the right camera 342 and the rear camera 343 as the monitoring area A1, but also detect the detection target Ob1 in a monitoring area A1 whose size and shape can be set as desired.

The limiting processor 14 executes a limiting process (restraining process) that limits (restrains) the movement of the work machine 3. The limiting processor 14 basically limits the movement of the work machine 3 based on a detection result of the detector 13. In particular, in the present embodiment, when the detection result of the detector 13 is a result indicating a presence of the detection target Ob1 (herein, a person) in the monitoring area A1, the limiting processor 14 executes the limiting process. The "limiting process" referred to in the present disclosure refers to a process that acts to limit (restrict) in some way a movement of the work machine 3.

For example, the limiting process includes a process of directly limiting a movement of the work machine 3 by controlling the traveling part 31, the swivel part 32, the work part 33, and the like of the work machine 3. As an example, the limiting process includes a process of prohibiting (disabling) the travel movement of the traveling part 31, a process of prohibiting (disabling) the swivel movement of the swivel part 32, and a process of prohibiting (disabling) the movement of the work part 33. Accordingly, a movement of the work machine 3 may be forcibly limited regardless of an operation by the user U1 (operator). That is, contact between the machine body 30 and the detection target Ob1 caused by the movement of the work machine 3 can be avoided. Furthermore, the limiting process includes a process of indirectly limiting a movement of the work machine 3 by warning the user U1 (operator) who operates the work machine 3 by means of sound or light (including display). Since a movement of the work machine 3 may be indirectly restrained by warning the user U1 (operator) who operates the work machine 3, a high degree of freedom in operating the work machine 3 is realized. That is, when the user U1 operates the work machine 3 paying attention to the detection target Ob1, a movement of the work machine 3 can be continued while contact with the detection target Ob1 is avoided.

In the present embodiment, the limiting processor 14 includes a first limiting processor 141 that controls the first limiting unit 48 and a second limiting processor 142 that controls the second limiting unit 49. Here, the second limiting unit 49 is a backup limiting unit for the first limiting unit 48, used when an abnormality is recognized in the first limiting unit 48. Therefore, the second limiting processor 142, which actuates the second limiting unit 49, is enabled only when an abnormality is recognized in the first limiting unit 48. In other words, in a steady state where no abnormality is recognized in the first limiting unit 48, function is enabled only in the first limiting processor 141 out of the first limiting processor 141 and the second limiting processor 142, while the second limiting processor 142 is disabled in the steady state. Therefore, in the steady state, when the detection result of the detector 13 is a result indicating a presence of the detection target Ob1 in the monitoring area A1, the first limiting processor 141 functions to execute the limiting process, and the second limiting processor 142 does not function.

The first limiting processor 141 limits the movement of individual drive units (hydraulic actuators) such as the hydraulic motor 43 of the traveling part 31, the hydraulic motor of the swivel part 32, and the hydraulic cylinder 44 of the work part 33 by actuating the first limiting unit 48. In other words, when a plurality of the drive units (hydraulic actuators) are installed on the machine body 30 of the work machine 3, a plurality of the first limiting units 48 are provided to correspond one-to-one to these plurality of drive units. The first limiting processor 141 is then capable of limiting the movement of only some of the drive units by individually activating one or two or more first limiting units 48 of these plurality of first limiting units 48. For example, the first limiting processor 141 can actuate only the first limiting unit 48 corresponding to the hydraulic motor 43 of the traveling part 31 out of the plurality of first limiting units 48 to prohibit (disable) traveling movement of the traveling part 31, in which case the swivel part 32 and the work part 33 are movable. In addition, the first limiting processor 141 is also capable of actuating all of the plurality of first limiting units 48 to limit the movement of all of the plurality of drive units installed on the machine body 30 of the work machine 3.

As an example in the present embodiment, the first limiting processor 141 actuates the first limiting unit 48 by closing the first control valve 481. In other words, when the first limiting processor 141 actuates the first limiting unit 48, the first control valve 481 shuts off the flow path of the pilot oil and stops the supply of the hydraulic oil from the hydraulic pump 41 to the hydraulic actuator, thereby forcibly stopping the movement of the hydraulic actuator. Here, when the detection result of the detector 13 is a result indicating a presence of the detection target Ob1 (herein, a person) in the monitoring area A1, the first limiting processor 141 actuates the first limiting unit 48 Thus, the first limiting processor 141 controls the first limiting unit 48, which limits the movement of the drive unit that drives the work machine 3.

The second limiting processor 142 collectively limits the movement of the plurality of drive units (hydraulic actuators) such as the hydraulic motor 43 of the traveling part 31, the hydraulic motor of the swivel part 32, and the hydraulic cylinder 44 of the work part 33 by actuating the second limiting unit 49. In other words, when the plurality of drive units (hydraulic actuators) are installed on the machine body 30 of the work machine 3, the second limiting unit 49 limits the movement of these plurality of drive units at once (collectively). The second limiting processor 142 then collectively limits the movement of these plurality of drive units by actuating the second limiting unit 49. In other words, when the second limiting processor 142 actuates the second limiting unit 49, for example, the traveling movement of the traveling part 31, the turning movement of the swivel part 32, and the movement of the work part 33 are all prohibited.

As an example in the present embodiment, the second limiting processor 142 actuates the second limiting unit 49 by closing the electromagnetic proportional valve 492. In other words, when the second limiting processor 142 actuates the second limiting unit 49, the electromagnetic proportional valve 492 limits the hydraulic oil discharge rate from the hydraulic pump 41 and stops the supply of the hydraulic oil from the hydraulic pump 41 to the hydraulic actuator, thereby forcibly stopping the movement of the hydraulic actuator. As a result, the second limiting processor 142 limits the movement of all of the plurality of drive units installed on the machine body 30 of the work machine 3. Thus, the second limiting processor 142 controls the second limiting unit 49, which limits the movement of the drive unit separately from the first limiting unit 48. In addition, as described below in detail, the second limiting processor 142 controls the second limiting unit 49 based at least on a determination result of determining whether or not the first limiting unit 48 has an abnormality.

Here, the limiting process executed by the second limiting processor 142 includes at least a process of limiting the swivel movement of the swivel part 32. Specifically, the second limiting processor 142 closes the electromagnetic proportional valve 492 and stops the supply of the hydraulic oil from the hydraulic pump 41, thereby at least disabling the hydraulic motor of the swivel part 32, which causes the swivel part 32 to come to an emergency stop when the swivel part 32 is in the swivel movement, and prohibits the swivel movement of the swivel part 32 when the swivel part 32 is not in the swivel movement. Accordingly, contact between the machine body 30 and the detection target Ob1 caused by swiveling of the swivel part 32 can be avoided, when the detection target Ob1 is present in the monitoring area A1 which is a blind spot for the user U1 (operator).

The determination processor 15 executes a determination process of determining whether or not the first limiting unit 48 has an abnormality. In other words, the determination processor 15 performs an abnormality determination of whether the first limiting unit 48 is normal or not (abnormal). In the present embodiment, the determination result of the determination processor 15 is used as a condition for activating the second limiting processor 142, since the second limiting processor 142 is enabled only when an abnormality is recognized in the first limiting unit 48, as described above. The "abnormality" of the first limiting unit 48 here includes, for example, a disconnection or short circuit of wiring for controlling the first limiting unit 48, or a failure (including sticking, etc.) of the first control valve 481.

As an example, When the first control valve 481 is driven by a current supplied from a driver circuit (not illustrated) that receives a control signal from the control system 1, the determination processor 15 is capable of detecting the occurrence of a disconnection or short circuit based on the magnitude (current value) of the current. In other words, by acquiring the magnitude (current value) of the current supplied from the driver circuit to the first control valve 481 at the data acquisition unit 12, the determination processor 15 is capable of determining whether or not the first limiting unit 48 has an abnormality based on the current value. For example, in a case where even when the driver circuit is trying to apply current to the first control valve 481 but the current value is less than a threshold value, the determination processor 15 determines that there is an "abnormality" such as a disconnection or short circuit in the first limiting unit 48. Alternatively, by acquiring an output of a pressure sensor that detects an oil pressure of the first control valve 481 at the data acquisition unit 12, the determination processor 15 is capable of determining whether or not the first limiting unit 48 has an abnormality based on the oil pressure. For example, in a case where even when a control signal to close the first control valve 481 is output, but an oil pressure equal to or higher than the threshold value is detected, the determination processor 15 determines that there is an "abnormality" such as a sticking of the first control valve 481 in the first limiting unit 48.

The notification processor 16 executes a notification process of making a notification when it is determined that the first limiting unit 48 has an abnormality. In other words, when the determination processor 15 determines that the first limiting unit 48 has an abnormality and when the second limiting processor 142 is enabled, the notification processor 16 performs a notification (also referred to as "abnormality notification"). In addition, in the present embodiment, the notification processor 16 also performs a notification when the second limiting unit 49 is in actuation. In other words, when a detection target Ob1 is detected in the monitoring area A1 in a state where the second limiting processor 142 is enabled, the notification processor 16 performs a notification (also referred to as "backup notification").

The notification by the notification processor 16 may be any kind of notification to the user U1 (operator), and may be in various modes. The mode of the notification by the notification processor 16 may be, for example, a display on the display device 2 (display unit 23), a sound such as a beep or voice, or vibration.

Here, the detector 13 is not an essential component of the control system 1. For example, the control system 1 may be configured such that a detection result of an external detector is acquired and the limiting processor 14 executes the limiting process based on the detection result.

### [3] Work Machine Control Method

Hereinafter, an example of a work machine 3's control method (hereinafter, simply referred to as a "control method") executed mainly by the control system 1 will be described with reference to FIG. 5 to FIG. 7.

The control method according to the present embodiment is executed by the control system 1, which is mainly constituted by a computer system, and in other words, the control method is embodied in a work machine control program (hereinafter, simply referred to as a "control program"). That is, the control program according to the present embodiment is a computer program that causes one or more processors to execute each of processes related to the control method. The above control program may be cooperatively executed by, for example, the control system 1 and the display device 2.

Here, when a preset specific start operation for executing the control program is performed, the control system 1 executes the following various types of processes related to the control method. Examples of the start operation include an operation of starting the engine 40 of the work machine 3. Meanwhile, when a preset specific end operation is performed, the control system 1 ends the following various types of processes related to the control method. Examples of the end operation include an operation of stopping the engine 40 of the work machine 3.

### Display Screen

Herein, first, a configuration of the display screen Dp1 displayed on the display unit 23 of the display device 2 by the control method according to the present embodiment will be described. In the drawings illustrating the display screen Dp1 displayed on the display unit 23 of the display device 2, such as FIG. 5, a dashed-dotted line, a leading line, and a reference sign representing regions are each merely for an illustrative purpose and may not be actually displayed at the display device 2.

As illustrated in FIG. 5, the display screen Dp1 includes a first region R1, a second region R2, a third region R3, a fourth region R4, a fifth region R5, a sixth region R6, a seventh region R7, an eighth region R8, a ninth region R9, and a tenth region R10.

Specifically, the display screen Dp1 is divided vertically (up-down direction) into four regions. Then, the upper three regions are each further divided into three regions in the transverse direction (left-right direction). As a result, the display screen Dp1 is divided into ten regions in total. Then, the second step regions from the top include, from left to right, the first region R1, the second region R2, and the third region R3. The lowest step region is the fourth region R4. Further, the third step regions from the top include, from left to right, the fifth region R5, the sixth region R6, and the seventh region R7, and the uppermost step regions include, from left to right, the eighth region R8, the ninth region R9, and the tenth region R10. Among the four regions vertically divided, a vertical size of the second step regions (the first region R1, the second region R2, and third region R3) from the top is the largest. Among the three regions transversely divided, a transverse size of middle regions (the second region R2, the sixth region R6, and the ninth region R9) is the largest.

The first region R1 is a rectangular region extending in the vertical direction. In the first region R1, for example, remaining amount information G1 regarding the remaining amount of fuel (e.g., diesel oil) in the engine is displayed. Based on an output (sensor signal) or the like of a remaining amount sensor, the display processor 11 generates the remaining amount information G1 in the display screen Dp1.

The second region R2 is a rectangular region extending in the transverse direction. In the second region R2, the captured images Im11, Im12, Im13 of the monitoring area A1, detection result information I1, I2 indicating the detection result of the detector 13, and the like are displayed. The captured image Im11 is an image of the small area A11, which is on the left of the driving part 321, captured by the left camera 341, and the captured image Im12 is an image of the small area A12, which is on the right of the driving part 321, captured by the right camera 342. The captured image Im13 is an image of the small area A13, which is at the rear of the driving part 321, captured by the rear camera 343.

The control system 1 causes the captured images Im11, Im12, Im13, which are acquired by the detector 13, to be displayed in real time. An icon Im10, which imitates the machine body 30 as seen from above, is displayed in a center portion of the second region R2. The icon Im10 schematically shows the positional relationships of imaging ranges (small areas A11, A12, and A13) of the left camera 341, the right camera 342 and the rear camera 343, as seen from the machine body 30.

The detection result information I1 is a band-shaped (frame-shaped) graphic image that displays, among the captured images Im11, Im12, and Im13, the captured image including the detection target Ob1 in an emphasized manner. The detection result information I2 is a graphic image indicating a direction in which the detection target Ob1 is present as seen from the driving part 321. The example in FIG. 5 assumes a case where the detection target Ob1 (herein, "person") is present in the small area A11 that is captured by the left camera 341 and that is on the left of the driving part 321. Therefore, among the captured images Im11, Im12, and Im13, the captured image Im11 is displayed in an emphasized manner by the detection result information I1, and the detection result information I2 indicating that the detection target Ob1 is present on the left of the driving part 321 is displayed below the captured image Im11.

The display mode of the detection result information I1 and the detection result information I2 is preferably changed according to a position of the detection target Ob1 in the monitoring area A1. For example, the display mode of the detection result information I1 and the detection result information I2, such as a display color, a size, or a display pattern (including blinking pattern and the like), is changed according to the position of the detection target Ob1 in the monitoring area A1. For example, the closer the detection target Ob1 is to the machine body 30, the more conspicuous the display color of the display mode of the detection result information I1 and the detection result information I2 becomes. For example, as the detection target Ob1 moves closer to the machine body 30, the display color of the detection result information I1 and the detection result information I2 changes from yellow to red.

Thus, the display screen Dp1 not only displays the captured images Im11, Im12, and Im13 of the monitoring area A1, but also displays, as the detection result information I1 and the detection result information I2, the detection result of the detection target Ob1 in the monitoring area A1. Therefore, the operator (user U1) can easily check the existence or nonexistence (presence or absence) of the detection target Ob1 in the monitoring area A1 by viewing the display screen Dp1. Thus, on the display screen Dp1 displayed on the display device 2, the operator (user U1) can check the situations at the work machine 3's sides and rear which are likely to be blind spots from the driving part 321. Therefore, compared with the configuration in which only the detection result information I1 and the detection result information I2 are displayed, when the detection target Ob1 is present in the monitoring area A1, it is easier to recognize in detail, on the display screen Dp1, the situation of the detection target Ob1.

In the third region R3, graphic images (icons) Im1 corresponding to operating states of respective components of the work machine 3 are displayed. In the third region R3, a plurality of the graphic images Im1 may be displayed, and a design (pattern) of each of the graphic images Im1 indicates which state of a battery, a seat belt, a cooling water temperature, a hydraulic oil temperature, or the like is represented, for example. Here, each of the graphic images Im1 indicates an operating state by, for example, a display mode, such as a display color or a size. The display processor 11 determines the state of each part of the work machine 3 using outputs of the various sensors (including the cooling water temperature sensor and the hydraulic oil temperature sensor) that detect the operating state of each part of the work machine 3. When an abnormal value is detected in any site, the display processor 11 performs warning display by changing the display mode, such as a display color, of the graphic image Im1 of the site.

The fourth region R4 is a band-shaped region that extends over an entire width of the display screen Dp1. The fourth region R4 displays items for operation on the display screen Dp1. In FIG. 5, six items including "Menu", "Crane", "Mode", "Camera", "PTO", and "Switch" are placed in this order from left in the fourth region R4, as an example. The six push button switches 221 to 226 of the operation unit 22 positioned right below the six items are associated with the six items, respectively. For example, the item "Menu" is associated with the push button switch 221, and the item "Crane" is associated with the push button switch 222. Therefore, when the push button switch 224 associated with the item "Camera" is operated by the user U1 (see FIG. 4), the item "Camera" is operated (selected).

In the fifth region R5, a warning display graphic image (icon) is displayed to indicate that an abnormal value is detected by the various sensors (including the cooling water temperature sensor and the hydraulic oil temperature sensor). In the sixth region R6, for example, information on the work part 33 that is operating in the work machine 3 is displayed. In the seventh region R7, for example, information on the operating state of the work machine 3, such as an engine speed, is displayed. In the eighth region R8, for example, a current time is displayed. In the ninth region R9, for example, information indicating an item to which the currently displayed display screen Dp1 belongs is displayed. In the tenth region R10, for example, information on an operating time (hour meter) of the work machine 3 is displayed.

### Details

Next, the control method according to the present embodiment will be described in detail.

The control method according to the present embodiment includes the following steps: actuating the first limiting unit 48, determining whether or not the first limiting unit 48 has an abnormality, and actuating the second limiting unit 49 based at least on the determination result of determining whether or not the first limiting unit 48 has an abnormality. The first limiting unit 48 limits the movement of the drive unit (hydraulic actuator) that drives the work machine 3. The second limiting unit 49 limits the movement of the drive unit (hydraulic actuator) separately from the first limiting unit 48.

According to this control method, in a case where the movement of the drive unit (hydraulic actuator including hydraulic motor 43 and hydraulic cylinder 44, etc.) should be limited, as for example when the detection target Ob1 is present in the monitoring area A1, the movement of the drive unit can be limited by actuating the first limiting unit 48. Moreover, when the movement of the drive unit should be limited, and in a case where an abnormality is recognized in the first limiting unit 48, the second limiting unit 49, which is a backup for the first limiting unit 48, can be actuated to limit the movement of the drive unit. Therefore, according to the control method of the present embodiment, even in the case where the first limiting unit 48 has an abnormality, the second limiting unit 49 can limit the movement of the drive unit when the movement of the drive unit should be limited, thereby improving the reliability of the movement of the work machine 3.

Specifically, the limiting processor 14 of the control system 1 enables the first limiting processor 141 and disables the second limiting processor 142 in a steady state where no abnormality is recognized in any of the plurality of first limiting units 48, based on the determination results of the determination processor 15. In other words, in a steady state where all of the plurality of first limiting units 48 are normal, only the first limiting processor 141 is enabled out of the first limiting processor 141 and the second limiting processor 142.

In this case, when the detection result of the detector 13 is a result indicating the presence of a detection target Ob1 (herein, a person) in the monitoring area A1, the first limiting processor 141 actuates the first limiting unit 48 to limit the movement of a desired drive unit. As an example, the first limiting processor 141 actuates the first limiting unit 48 corresponding to the hydraulic motor 43 of the traveling part 31 to stop the hydraulic motor 43. However, this embodiment is not limited to this example, the first limiting processor 141 may, for example, actuate the first limiting unit 48 corresponding to one or more drive units among the hydraulic motor 43 of the traveling part 31, the hydraulic motor of the swivel part 32 and the hydraulic cylinder 44 of the work part 33 to stop the one or more drive units.

On the other hand, the limiting processor 14 of the control system 1 disables the first limiting processor 141 and enables the second limiting processor 142 when an abnormality is recognized in any of the first limiting units 48 based on the determination results of the determination processor 15. In other words, the second limiting processor 142 is enabled in an abnormal state where there is an abnormality in any of the plurality of first limiting units 48.

In this case, when the detection result of the detector 13 is a result indicating a presence of a detection target Ob1 (herein, a person) in the monitoring area A1, the second limiting processor 142 actuates the second limiting unit 49 to limit the movement of all drive units. As an example, the second limiting processor 142 closes the electromagnetic proportional valve 492 of the second limiting unit 49, thereby stopping the supply of the hydraulic oil from the hydraulic pump 41 and stopping all of the plurality of drive units including the hydraulic motor 43 of the traveling part 31, the hydraulic motor of the swivel part 32, and the hydraulic cylinder 44 of the work part 33.

Thus, the control method according to the present embodiment can limit the movement of the drive unit by actuating the first limiting unit 48 when the first limiting unit 48 is normal, or by actuating the second limiting unit 49 for backup when the first limiting unit 48 has an abnormality.
Therefore, both in a steady state where there is no abnormality in the first limiting unit 48 and in an abnormal state where the first limiting unit 48 has an abnormality, the movement of the drive unit can be limited by the first limiting unit 48 or the second limiting unit 49 when the movement of the drive unit should be limited, thus improving the reliability of the movement of the work machine 3.

Here, the range of the drive units subject to limitation by the first limiting unit 48 is not the same as the range of the drive units subject to limitation by the second limiting unit 49. In the present embodiment, in particular, the range of the drive units subject to limitation by the second limiting unit 49 is wider than the range of the drive units subject to limitation by the respective first limiting units 48. Therefore, in a steady state where there is no abnormality in the first limiting unit 48, by limiting the movement of the drive unit with the first limiting unit 48, the movement of the drive unit can be limited while keeping the limitation of the movement of the work machine 3 as small as possible.

In other words, in the present embodiment, the work machine 3 includes a plurality of the drive units. The second limiting unit 49 limits the movement, among the plurality of drive units, targeting a first drive unit that is subject to movement limitation by the first limiting unit 48 and a second drive unit that is different from the first drive unit. For example, when the "first drive unit" subject to movement limitation by any of the first limiting units 48 is the hydraulic motor 43 of the traveling part 31, the second limiting unit 49 also makes the "second drive unit" such as the hydraulic motor of the swivel part 32, which is different from the first drive unit (hydraulic motor 43), subject to movement limitation. As a result, for example, a single second limiting unit 49 can be used to back up both the first limiting unit 48 that limits the first drive unit and the first limiting unit 48 that limits the second drive unit, thereby simplifying the second limiting unit 49 for backup.

In the present embodiment, the work machine 3 includes a plurality of the first limiting units 48 and a plurality of the drive units. The second limiting unit 49 collectively limits the movement of the plurality of drive units that are subject to movement limitation by the plurality of first limiting units 48. In other words, the first limiting unit 48 limits the movement of each drive unit (individually), whereas the second limiting unit 49 limits the movement of the plurality of drive units collectively. As a result, for example, a single second limiting unit 49 can be used to back up the plurality of first limiting units 48, thereby simplifying the second limiting unit 49 for backup. In the present embodiment, in particular, a single second limiting unit 49 is sufficient because the second limiting unit 49 collectively limits the movement for all of the plurality of drive units that are subject to movement limitation by the plurality of first limiting units 48.

In the present embodiment, the first limiting unit 48 is provided on each of the supply paths of the pilot oil to the direction switching valve 47 for controlling each of the plurality of drive units. In other words, the first limiting unit 48 limits the movement of each of the drive units individually by controlling the pilot pressure input to the direction switching valve 47 with the first control valve 481. Meanwhile, the second limiting unit 49 includes the electromagnetic proportional valve 492 that varies the hydraulic oil discharge rate of the hydraulic pump 41 and the engine control unit 493. In other words, the second limiting unit 49 collectively limits the movement of the plurality of drive units by adjusting the discharge rate at a major source of the hydraulic oil from the hydraulic pump 41, which is the source of power for the plurality of drive units.

In short, the first limiting unit 48 limits the movement of the drive unit by controlling the pilot pressure input to the direction switching valve 47 that controls the drive unit. The second limiting unit 49 limits the movement of the drive unit by controlling the discharge flow rate of the hydraulic pump 41 that forcibly feeds hydraulic oil to the drive unit. This allows the second limiting unit 49 for backup of the first limiting unit 48 to be realized with a relatively simple configuration. In other words, even when a plurality of the first limiting units 48 are provided, the second limiting unit 49 can be realized with a single device that controls the discharge flow rate of the hydraulic pump 41.

In addition to the determination result of determining whether or not the first limiting unit 48 has an abnormality, the control method according to the present embodiment actuates the second limiting unit 49 based on the detection result of the detection target Ob1. In other words, in the present embodiment, since the second limiting unit 49 is a backup limiting unit for the first limiting unit 48, similarly to the first limiting unit 48, the second limiting unit 49 is also activated when the detection result of the detector 13 is a result indicating a presence of the detection target Ob1 (herein, a person) in the monitoring area A1. Therefore, the second limiting processor 142 actuates the second limiting unit 49 when the first limiting unit 48 is determined to have an abnormality and the detection target Ob1 is present in the monitoring area A1. This enables the second limiting unit 49 to actuate as a substitute for the first limiting unit 48.

Here, in the present embodiment, it is possible to set individual conditions for the detection result of the detector 13 in the first limiting unit 48 and the second limiting unit 49. In other words, in the control method according to the present embodiment, the first limiting unit 48 is actuated when the detection result of the detection target Ob1 satisfies a first condition. Also, in this control method, the second limiting unit 49 is actuated when the first limiting unit 48 is determined to have an abnormality and the detection result of the detection target Ob1 satisfies a second condition. As an example, the first condition includes that the detection target Ob1 is within a first distance (e.g., "3 m") from the machine body 30, and the second condition includes that the detection target Ob1 is within a second distance (e.g., "2 m") from the machine body 30. In this case, when there is no abnormality in the first limiting unit 48, and when the detection target Ob1 is within the first distance (3 m) from the machine body 30, the first limiting processor 141 actuates the first limiting unit 48. On the other hand, when the first limiting unit 48 has an abnormality, even in a case where the detection target Ob1 is within the first distance (3 m) from the machine body 30 but not within the second distance (2 m), the second limiting processor 142 does not actuate the second limiting unit 49. When the distance from the machine body 30 to the detection target Ob1 is between the first distance and the second distance, the first limiting unit 48 is actuated but the second limiting unit 49 is not.

In this way, it is possible to prevent the second limiting unit 49, which has a large impact on the movement of the work machine 3, from being actuated easily by being able to set individual conditions for the detection result of the detector 13 in the first limiting unit 48 and the second limiting unit 49, for example, the condition for actuating the second limiting unit 49 can be made relatively strict, as described above. Conversely, the condition for actuating the second limiting unit 49 may be made relatively loose, so that when the first limiting unit 48 has an abnormality, the second limiting unit 49 may be actuated more reliably to limit the movement of the drive unit. However, the first condition and the second condition may be set individually, or the first condition and the second condition may be set identically.

In addition, the control method according to the present embodiment further includes disabling the first limiting unit 48 that is determined to have an abnormality. In short, when any of the first limiting units 48 is determined to have an abnormality by the determination processor 15, the limiting processor 14 disables the function of the first limiting units 48 that are determined to have the abnormality. As a result, it is possible to avoid that the first limiting unit 48 is actuated halfway, in a case where an occasional abnormality is recognized in the first limiting unit 48, for example, when a wire is about to be disconnected.

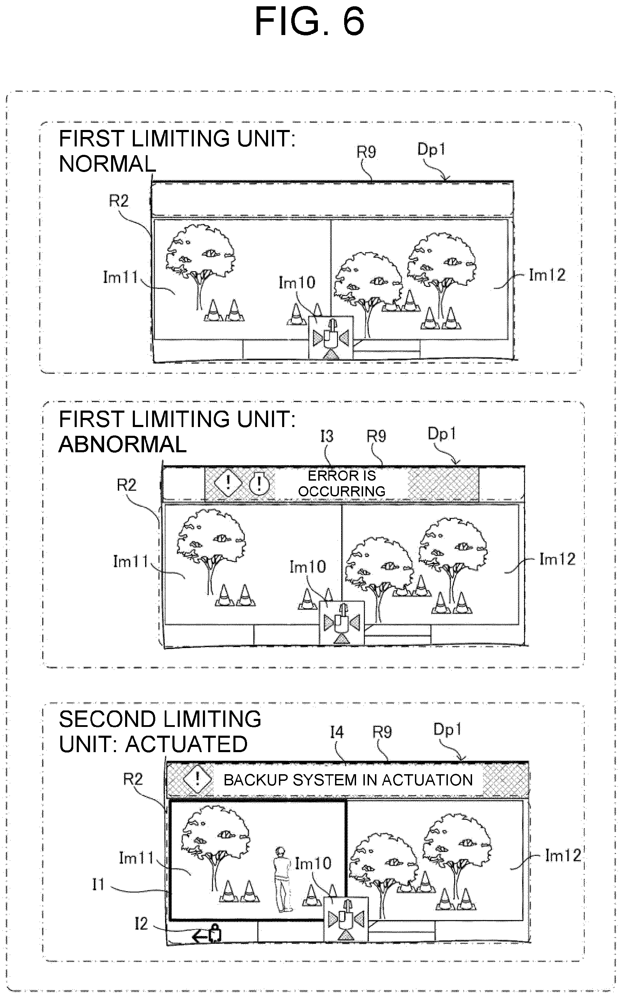

Here, the notification processor 16 of the control system 1 performs a predetermined notification when the first limiting unit 48 is determined to have an abnormality and when the second limiting unit 49 is in actuation, respectively. As an example in the present embodiment, the notification processor 16 performs the abnormality notification and the backup notification by displaying notification objects I3 and I4 in the display screen Dp1 shown on the display unit 23 of the display device 2, as illustrated in FIG. 6. FIG. 6 shows a cutout of only a portion of the ninth region R9 and the second region R2 of the display screen Dp1.

Specifically, if there is no abnormality in the first limiting unit 48, the ninth region R9 is blank, as shown as "First limiting unit: normal". On the other hand, when the first limiting unit 48 has an abnormality and the detection target Ob1 is not present in the monitoring area A1, the notification object I3 is displayed in the ninth region R9 as shown as "First limited area: abnormal". At this time, the second limiting processor 142 is enabled, but the second limiting unit 49 is not actuated. The notification object I3 contains text indicating that the first limiting unit 48 has an abnormality, for example, "An error is occurring. When the first limiting unit 48 has an abnormality and the detection target Ob1 is present in the monitoring area A1, the notification object I4 is displayed in the ninth region R9, as shown as "Second limiting unit: actuated". At this time, the second limiting processor 142 actuates the second limiting unit 49. The notification object I4 contains text indicating that the second limiting unit 49 is in actuation, for example, "Backup system in actuation".

In other words, the notification object I3 is an example of a notification performed when it is determined that the first limiting unit 48 has an abnormality (abnormality notification), and the notification object I4 is an example of a notification performed when the second limiting unit 49 is in actuation (backup notification). Therefore, the operator can easily grasp the state of the first limiting unit 48 and the second limiting unit 49 with the notification objects I3 and I4 displayed on the display screen Dp1. The display position and display mode of these notification objects I3 and I4 are merely examples. For example, the notification objects I3 and I4 may be marks (including graphic images) other than text.

### Overall Process

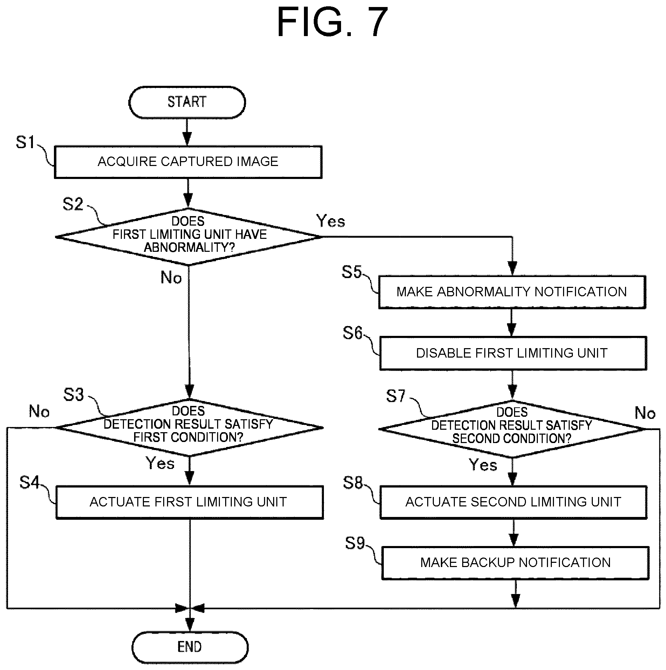

Next, the overall flow of processes related to the control method will be described with reference to FIG. 7. FIG. 7 is a flowchart illustrating an example of a process related to the control method.

As illustrated in FIG. 7, the data acquisition unit 12 of the control system 1 acquires the captured images Im11, Im12, and Im13 from the left camera 341, the right camera 342, and the rear camera 343 (S1). Next, the determination processor 15 of the control system 1 determines whether or not the first limiting unit 48 has an abnormality (S2). At this time, when it is determined that all of the plurality of first limiting units 48 are normal (S2: No), the control system 1 moves the process to step S3. On the other hand, when it is determined that there is an abnormality such as a disconnection or short circuit of wiring or a failure (including sticking, etc.) of the first control valve 481 in one or more first limiting units 48 among the plurality of first limiting units 48 (S2: Yes), the control system 1 moves the process to step S5.

In step S3, the limiting processor 14 of the control system 1 determines whether or not the detection result of the detector 13 satisfies the first condition. As an example, when the detection target Ob1 is present within the first distance (e.g., "3 m") from the machine body 30, the limiting processor 14 determines that the first condition is satisfied (S3: Yes), and the first limiting processor 141 of the limiting processor 14 actuates the first limiting unit 48 (S4). At this time, for example, when the first limiting unit 48 corresponding to the hydraulic motor 43 of the traveling part 31 is actuated among the plurality of first limiting units 48, the traveling movement of the traveling part 31 is prohibited, but the movement of the swivel part 32 and the work part 33 is permitted. On the other hand, if the detection target Ob1 is not present within the first distance (e.g., "3 m") from the machine body 30, the limiting processor 14 determines that the first condition is not satisfied (S3: No) and skips step S4, so the first limiting unit 48 is not actuated.

In step S5, the notification processor 16 of the control system 1 performs the abnormality notification to notify the user of the abnormality in the first limiting unit 48 by, for example, displaying the notification object I3 on the display screen Dp1 of the display device 2. Next, the limiting processor 14 of the control system 1 disables the function of the first limiting processor 141, thereby disabling all first limiting units 48, including the first limiting unit 48 that is determined to have an abnormality (S6).

In the next step S7, the limiting processor 14 of the control system 1 determines whether the detection result of the detector 13 satisfies the second condition. As an example, when the detection target Ob1 is present within a second distance (e.g., "2 m") from the machine body 30, the limiting processor 14 determines that the second condition is satisfied (S7: Yes), and the second limiting processor 142 of the limiting processor 14 actuates the second limiting unit 49 (S8). At this time, for example, the electromagnetic proportional valve 492 of the second limiting unit 49 closes, thereby stopping the supply of the hydraulic oil from the hydraulic pump 41, which forcibly prohibits the movement of all drive units of the work machine 3. Furthermore, the notification processor 16 of the control system 1 performs the backup notification to notify that the second limiting unit 49 is in actuation, for example, by displaying the notification object I4 on the display screen Dp1 of the display device 2. On the other hand, if the detection target Ob1 is not present within the second distance (e.g., "2 m") from the machine body 30, the limiting processor 14 determines that the second condition is not satisfied (S7: No) and skips steps S8 and S9, so the second limiting unit 49 is not actuated.

The control system 1 repeatedly executes the processes in step S1 to step S9 described above. However, the flowchart shown in FIG. 7 merely constitutes one example, and therefore, the process may appropriately be added or omitted, or the order of the processes may appropriately be changed.

### [4] Modified Examples

Hereinafter, the modified examples of the first embodiment will be described. The modified examples described below can be applied in combination as appropriate.

The control system 1 according to the present disclosure includes a computer system. The computer system includes, as main components, one or more processors and one or more storages as hardware. The processor, by executing the program recorded in the memory of the computer system, realizes the function as the control system 1 in the present disclosure. The program may be recorded in advance in the memory of the computer system, may be provided through an electric communication line, or may be recorded in a non-transitory recording medium, such as a memory card, an optical disk, a hard disk drive, or the like, each of which is readable by the computer system. Furthermore, a part of or all of the function units included in the control system 1 may be configured by an electronic circuit.

A configuration in which at least a part of the functions of the control system 1 is integrated in one housing is not essential for the control system 1, and the components of the control system 1 may be provided in a plurality of housings in a distributed manner. Conversely, in the first embodiment, functions that are distributed to a plurality of devices (for example, the control system 1 and the display device 2) be integrated in one housing. Furthermore, at least a part of the functions of the control system 1 may be realized by a cloud (cloud computing) or the like.

Further, the power source of the work machine 3 is not limited to a diesel engine, but may be, for example, an engine other than the diesel engine, a motor (electric motor), or a hybrid power source that includes the engine and the motor (electric motor).

Further, the display device 2 is not limited to a dedicated device, but may be a general-purpose terminal such as a laptop computer, a tablet terminal, or a smartphone. Further, the display unit 23 is not limited to a mode that directly displays a display screen, such as a liquid crystal display or an organic EL display, but may be a configuration that displays the display screen by projection, such as a projector.

Further, as a mode for inputting information of the operation unit 22, a mode other than the push button switch, the touch panel, and the operation dial may be employed. For example, the operation unit 22 may employ any mode such as a keyboard, a pointing device such as mouse, a voice input, a gesture input, or inputting an operation signal from another terminal.

The limiting process executed by the limiting processor 14 may be any process that limits a movement of the work machine 3, and is not limited to a process that prohibits (disables) the movement (such as the swivel movement) of the work machine 3. The limiting process may be, for example, a process to reduce a speed of a movement (such as the swivel movement) of the work machine 3, narrow a movement range (such as a swiveling angle) of the work machine 3, or limit an allowable area of the movement of the work machine 3. As an example, the second limiting unit 49 is capable of reducing the movement speed of the drive unit by reducing the hydraulic oil discharge rate of the hydraulic pump 41 under the control of the electromagnetic proportional valve 492 or the engine control unit 493.

Further, the sensors for detecting the detection target Ob1 in the monitoring area A1 around the work machine 3 are not limited to the left camera 341, the right camera 342 and the rear camera 343, and may include one, two, or four or more cameras (image sensors). Furthermore, for example, a camera capable of capturing images in all directions seen from the work machine 3, such as an entire celestial sphere camera (360-degree camera), may be used to detect the detection target Ob1 in the monitoring area A1. The sensors for detecting the detection target Ob1 in the monitoring area A1 may include, in addition to or instead of the cameras, for example, sensors, such as a motion sensor, a sonar sensor, a radar or Light Detection and Ranging (LiDAR). Here, the sensor for detecting the detection target Ob1 in the monitoring area A1 may be a three-dimensional sensor that measures a distance to the detection target Ob1 by a time of flight (TOF) method, which measures a distance to a distance measurement point based on the round trip time taken by light or sound to reach the distance measurement point and return from the distance measurement point.

Further, the detection target Ob1 may include, in addition to or instead of a "person", a mobile object such as a vehicle (including other work machines), a structure such as a wall and a pillar, a plant, an animal, a step, a groove, or other obstacles.

It is not required that the second limiting unit 49 is actuated based on the detection result of the detection target Ob1 in addition to the determination result of determining whether or not the first limiting unit 48 has an abnormality. In other words, when it is determined that the first limiting unit 48 has an abnormality, the second limiting processor 142 may actuate the second limiting unit 49 regardless of the detection result of the detection target Ob1. Furthermore, it is not required that the conditions for the detection result of the detection target Ob1 are set separately in the first limiting unit 48 and the second limiting unit 49.

It is not required that the second limiting unit 49 limits the movement, among the plurality of drive units, targeting a first drive unit that is subject to movement limitation by the first limiting unit 48 and a second drive unit that is different from the first drive unit. Furthermore, it is not required that the second limiting unit 49 collectively limits the movement of the plurality of drive units that are subject to movement limitation by the plurality of first limiting units 48. For example, the second limiting unit 49 may be provided for each drive unit, similar to the first limiting unit 48. It is not required that the first limiting unit 48 limits the movement of the drive unit by controlling the pilot pressure input to the direction switching valve 47 that controls the drive unit. Furthermore, it is not required that the second limiting unit 49 limits the movement of the drive unit by controlling the discharge flow rate of the hydraulic pump 41 that forcibly feeds hydraulic oil to the drive unit.

It is not required to disable the first limiting unit 48 that is determined to have an abnormality. Also, it is not required to make a notification when it is determined that the first limiting unit 48 has an abnormality.
Furthermore, it is not required to make a notification when the second limiting unit 49 is in actuation.

As an example in the first embodiment, the work machine 3 is operated by operation (including remote operation) of a person (operator), but the work machine 3 may be an unmanned machine operated by automatic operation.

### (Second Embodiment)

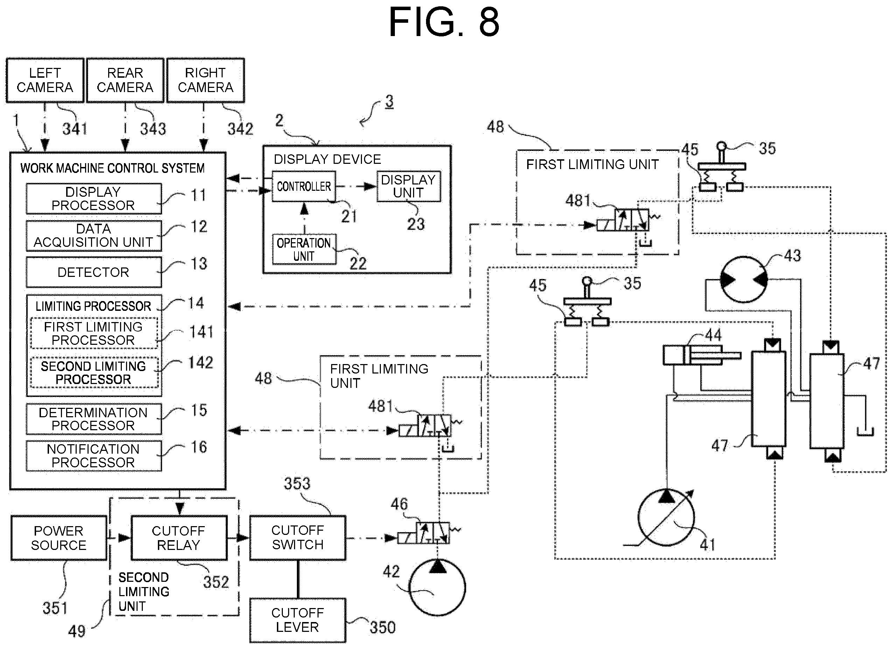

The work machine 3 according to the present embodiment differs from the work machine 3 according to the first embodiment in that the second limiting unit 49 includes a cutoff relay 352, as illustrated in FIG. 8. Hereinafter, the same components as those in the first embodiment will be denoted by the same reference signs, and the description thereof will be properly omitted. In FIG. 8, a solid line shows a high-pressure oil path (for hydraulic oil), a dotted line shows a low-pressure oil path (for pilot oil), and a dashed-dotted line arrow shows an electric signal path. In addition, a thick (solid) line between the cutoff lever 350 and the cutoff switch 353 represents a physical connection between the cutoff lever 350 and the cutoff switch 353.

The cutoff relay 352 is electrically connected in series with the cutoff switch 353 between the control valve 46 and the power source 351. In other words, the control valve 46 is connected via the cutoff relay 352 and the cutoff switch 353 to the power source 351, and operates according to the current supplied from the power source 351. The cutoff relay 352 is electrically connected to the control system 1 and is switched between on and off in response to a control signal (electric signal) supplied from the control system 1. In this configuration, when both the cutoff relay 352 and the cutoff switch 353 are on, the control valve 46 is energized and shuts off the flow path of the pilot oil, so that the drive unit (hydraulic actuator) is forcibly stopped. On the other hand, when at least one of the cutoff relay 352 and the cutoff switch 353 is in an off state, the control valve 46 is de-energized and the flow path of the pilot oil is opened, so that the drive unit is movable.

According to the configuration of the present embodiment, the circuit of the cutoff switch 353 can be used as the second limiting unit 49, so the second limiting unit 49 for backup of the first limiting unit 48 can be realized with a relatively simple configuration. In FIG. 8, the illustration of the control signal input port 491 (see FIG. 2), the electromagnetic proportional valve 492 (see FIG. 2), and the engine control unit 493 (see FIG. 2) is omitted, but the work machine 3 may have the control signal input port 491, the electromagnetic proportional valve 492, and the engine control unit 493.

The configuration of the second embodiment can be employed in combination with the various configurations (including the modified examples) described in the first embodiment as necessary.

### REFERENCE SIGNS LIST

1: Work machine control system
3: Work machine
15: Determination processor
30: Machine body
41: hydraulic pump
43: Hydraulic motor (drive unit, first drive unit)
44: Hydraulic cylinder (drive unit, second drive unit)
47: Direction switching valve
48: First limiting unit
49: Second limiting unit
141: First limiting processor
142: Second limiting processor
A1: Monitoring area
Ob1: Detection target

## Claims

1. A work machine control method, comprising:
actuating a first limiting unit (48) that limits a movement of a drive unit (43,44) which drives a work machine (1);
**characterized in that** the work machine control method further comprises:
determining whether or not the first limiting unit (48) has an abnormality; and
actuating a second limiting unit (49) that limits the movement of the drive unit (43,44) separately from the first limiting unit (48), based at least on a determination result of determining whether or not the first limiting unit (48) has an abnormality.

2. The work machine control method according to claim 1, further comprising:
detecting a detection target (Ob1) in a monitoring area around the work machine (1),
wherein the second limiting unit (49) is actuated based on, in addition to the determination result of determining whether or not the first limiting unit (48) has an abnormality, a detection result of the detection target (Ob1).

3. The work machine control method according to claim 2, wherein
the first limiting unit (48) is actuated when the detection result of the detection target (Ob1) satisfies a first condition, and
the second limiting unit (49) is actuated when the first limiting unit (48) is determined to have an abnormality and when the detection result of the detection target (Ob1) satisfies a second condition.

4. The work machine control method according to any one of claims 1 to 3, wherein
the work machine (1) includes a plurality of the drive units (43,44), and
the second limiting unit (49) limits a movement of a first drive unit (43) that is subject to movement limitation by the first limiting unit (48) and a movement of a second drive unit (44) that is different from the first drive unit (43), the first drive unit (43) and the second drive unit (44) being included in the plurality of drive units (43,44).

5. The work machine control method according to any one of claims 1 to 3, wherein
the work machine (1) includes a plurality of the first limiting units (48) and a plurality of the drive units (43,44), and
the second limiting unit (49) collectively limits the movement of the plurality of drive units (43,44) that are subject to movement limitation by the plurality of first limiting units (48).

6. The work machine control method according to any one of claims 1 to 3, wherein
the first limiting unit (48) limits the movement of the drive unit (43,44) by controlling a pilot pressure that is input to a direction switching valve (47) controlling the drive unit (43,44), and
the second limiting unit (49) limits the movement of the drive unit (43,44) by controlling a discharge flow rate of a hydraulic pump (41) that forcibly feeds hydraulic oil to the drive unit (43,44).

7. The work machine control method according to any one of claims 1 to 3, further comprising:
disabling the first limiting unit (48) that is determined to have an abnormality.

8. The work machine control method according to any one of claims 1 to 3, further comprising:
making a notification when the first limiting unit (48) is determined to have an abnormality.

9. The work machine control method according to any one of claims 1 to 3, further comprising:
making a notification when the second limiting unit (49) is in actuation.

10. A work machine control program that causes one or more processors to execute the work machine control method according to any one of claims 1 to 3.

11. A work machine control system (1), comprising:
a first limiting processor (141) that controls a first limiting unit (48) which limits a movement of a drive unit (43,44) that drives a work machine (1);
**characterized in that** the work machine control system further comprises:
a determination processor (15) that determines whether or not the first limiting unit (48) has an abnormality; and
a second limiting processor that controls a second limiting unit (49) which limits the movement of the drive unit (43,44) separately from the first limiting unit (48), based at least on a determination result of determining whether or not the first limiting unit (48) has an abnormality.

12. A work machine (3), comprising:
the work machine control system (1) according to claim 11; and
a machine body on which the drive unit (43,44) is installed.

## Patentansprüche

1. Verfahren zum Steuern einer Arbeitsmaschine, umfassend:
Betätigen einer ersten Begrenzungseinheit (48), die eine Bewegung einer Antriebseinheit (43, 44), die eine Arbeitsmaschine (1) antreibt, begrenzt;
**dadurch gekennzeichnet, dass** das Verfahren zum Steuern einer Arbeitsmaschine ferner umfasst:
Bestimmen, ob die erste Begrenzungseinheit (48) eine Anomalie aufweist oder nicht; und
Betätigen einer zweiten Begrenzungseinheit (49), welche die Bewegung der Antriebseinheit (43, 44) getrennt von der ersten Begrenzungseinheit (48) mindestens basierend auf einem Bestimmungsergebnis des Bestimmens, ob die erste Begrenzungseinheit (48) eine Anomalie aufweist oder nicht, begrenzt.

2. Verfahren zum Steuern einer Arbeitsmaschine nach Anspruch 1, ferner umfassend:
Detektieren eines Detektionsziels (Ob1) in einem Überwachungsbereich um die Arbeitsmaschine (1) herum,
wobei die zweite Begrenzungseinheit (49) zusätzlich zu dem Bestimmungsergebnis des Bestimmens, ob die erste Begrenzungseinheit (48) eine Anomalie aufweist oder nicht, basierend auf einem Detektionsergebnis des Detektionsziels (Ob1) betätigt wird.

3. Verfahren zum Steuern einer Arbeitsmaschine nach Anspruch 2, wobei
die erste Begrenzungseinheit (48) betätigt wird, wenn das Detektionsergebnis des Detektionsziels (Ob1) eine erste Bedingung erfüllt, und
die zweite Begrenzungseinheit (49) betätigt wird, wenn bestimmt wird, dass die erste Begrenzungseinheit (48) eine Anomalie aufweist, und wenn das Detektionsergebnis des Detektionsziels (Ob1) eine zweite Bedingung erfüllt.

4. Verfahren zum Steuern einer Arbeitsmaschine nach einem der Ansprüche 1 bis 3, wobei
die Arbeitsmaschine (1) eine Vielzahl der Antriebseinheiten (43, 44) umfasst, und
die zweite Begrenzungseinheit (49) eine Bewegung einer ersten Antriebseinheit (43), die einer Bewegungsbegrenzung durch die erste Begrenzungseinheit (48) unterliegt, und eine Bewegung einer zweiten Antriebseinheit (44), die anders als die erste Antriebseinheit (43) ist, begrenzt, wobei die erste Antriebseinheit (43) und die zweite Antriebseinheit (44) in der Vielzahl von Antriebseinheiten (43, 44) enthalten sind.

5. Verfahren zum Steuern einer Arbeitsmaschine nach einem der Ansprüche 1 bis 3, wobei
die Arbeitsmaschine (1) eine Vielzahl der ersten Begrenzungseinheiten (48) und eine Vielzahl der Antriebseinheiten (43, 44) umfasst, und
die zweite Begrenzungseinheit (49) insgesamt die Bewegung der Vielzahl von Antriebseinheiten (43, 44) begrenzt, die der Bewegungsbegrenzung durch die Vielzahl von ersten Begrenzungseinheiten (48) unterliegen.

6. Verfahren zum Steuern einer Arbeitsmaschine nach einem der Ansprüche 1 bis 3, wobei
die erste Begrenzungseinheit (48) die Bewegung der Antriebseinheit (43, 44) begrenzt, indem sie einen Vorsteuerdruck steuert, der in ein Richtungsschaltventil (47) eingegeben wird, das die Antriebseinheit (43, 44) steuert, und
die zweite Begrenzungseinheit (49) die Bewegung der Antriebseinheit (43, 44) begrenzt, indem sie eine Ablassfördermenge einer Hydraulikpumpe (41) steuert, die der Antriebseinheit (43, 44) zwangsläufig Hydrauliköl zuführt.

7. Verfahren zum Steuern einer Arbeitsmaschine nach einem der Ansprüche 1 bis 3, ferner umfassend:
Deaktivieren der ersten Begrenzungseinheit (48), von der bestimmt wird, dass sie eine Anomalie aufweist.

8. Verfahren zum Steuern einer Arbeitsmaschine nach einem der Ansprüche 1 bis 3, ferner umfassend:
Erstellen einer Benachrichtigung, wenn bestimmt wird, dass die erste Begrenzungseinheit (48) eine Anomalie aufweist.

9. Verfahren zum Steuern einer Arbeitsmaschine nach einem der Ansprüche 1 bis 3, ferner umfassend:
Erstellen einer Benachrichtigung, wenn die zweite Begrenzungseinheit (49) betätigt wird.

10. Programm zum Steuern einer Arbeitsmaschine, das bewirkt, dass ein oder mehrere Prozessoren das Verfahren zum Steuern einer Arbeitsmaschine nach einem der Ansprüche 1 bis 3 ausführen.

11. System zum Steuern einer Arbeitsmaschine (1), umfassend:
einen ersten Begrenzungsprozessor (141), der eine erste Begrenzungseinheit (48) steuert, die eine Bewegung einer Antriebseinheit (43, 44), die eine Arbeitsmaschine (1) antreibt, begrenzt;
**dadurch gekennzeichnet, dass** das System zum Steuern einer Arbeitsmaschine ferner umfasst:
einen Bestimmungsprozessor (15), der bestimmt, ob die erste Begrenzungseinheit (48) eine Anomalie aufweist oder nicht; und
einen zweiten Begrenzungsprozessor, der eine zweite Begrenzungseinheit (49) steuert, welche die Bewegung der Antriebseinheit (43, 44) getrennt von der ersten Begrenzungseinheit (48) mindestens basierend auf einem Bestimmungsergebnis des Bestimmens, ob die erste Begrenzungseinheit (48) eine Anomalie aufweist oder nicht, begrenzt.

12. Arbeitsmaschine (3), umfassend:
das System zum Steuern einer Arbeitsmaschine (1) nach Anspruch 11; und
eine Maschinenkarosserie, an der die Antriebseinheit (43, 44) installiert ist.

## Revendications

1. Procédé de commande de machine de travail, comprenant l'étape suivante :
actionner une première unité de limitation (48) qui limite un déplacement d'une unité d'entraînement (43, 44) qui entraîne une machine de travail (1) ;
**caractérisé en ce que** le procédé de commande de machine de travail comprend en outre les étapes suivantes :
déterminer si la première unité de limitation (48) présente ou non une anomalie ; et
actionner une deuxième unité de limitation (49) qui limite le déplacement de l'unité d'entraînement (43, 44) séparément de la première unité de limitation (48), en se basant au moins en partie sur un résultat de détermination déterminant si la première unité de limitation (48) présente ou non une anomalie.

2. Procédé de commande de machine de travail selon la revendication 1, comprenant en outre l'étape suivante :
détecter une cible de détection (Ob1) dans une zone de surveillance autour de la machine de travail (1),
dans lequel la deuxième unité de limitation (49) est actionnée en se basant sur, en plus du résultat de détermination déterminant si la première unité de limitation (48) présente ou non une anomalie, un résultat de détection de la cible de détection (Ob1).

3. Procédé de commande de machine de travail selon la revendication 2, dans lequel
la première unité de limitation (48) est actionnée lorsque le résultat de détection de la cible de détection (Ob1) satisfait à une première condition, et la deuxième unité de limitation (49) est actionnée lorsqu'il est déterminé que la première unité de limitation (48) présente une anomalie et lorsque le résultat de détection de la cible de détection (Ob1) satisfait à une deuxième condition.

4. Procédé de commande de machine de travail selon l'une des revendications 1 à 3, dans lequel
la machine de travail (1) comporte une pluralité d'unités d'entraînement (43, 44), et
la deuxième unité de limitation (49) limite un déplacement d'une première unité d'entraînement (43) qui est soumise à une limitation de déplacement par la première unité de limitation (48) et un déplacement d'une deuxième unité d'entraînement (44) qui est différente de la première unité d'entraînement (43), la première unité d'entraînement (43) et la deuxième unité d'entraînement (44) étant incluses dans la pluralité d'unités d'entraînement (43, 44).

5. Procédé de commande de machine de travail selon l'une des revendications 1 à 3, dans lequel
la machine de travail (1) comporte une pluralité de premières unités de limitation (48) et une pluralité d'unités d'entraînement (43, 44), et
la deuxième unité de limitation (49) limite collectivement le déplacement de la pluralité d'unités d'entraînement (43, 44) qui sont soumises à une limitation de déplacement par la pluralité de premières unités de limitation (48).

6. Procédé de commande de machine de travail selon l'une des revendications 1 à 3, dans lequel
la première unité de limitation (48) limite le déplacement de l'unité d'entraînement (43, 44) en commandant une pression de pilotage qui est entrée dans une soupape de commutation de direction (47) qui commande l'unité d'entraînement (43, 44), et
la deuxième unité de limitation (49) limite le déplacement de l'unité d'entraînement (43, 44) en commandant un débit de refoulement d'une pompe hydraulique (41) qui alimente de force l'unité d'entraînement (43, 44) en huile hydraulique.

7. Procédé de commande de machine de travail selon l'une des revendications 1 à 3, comprenant en outre l'étape suivante :
désactiver la première unité de limitation (48) qui est déterminée comme présentant une anomalie.

8. Procédé de commande de machine de travail selon l'une des revendications 1 à 3, comprenant en outre l'étape suivante :
émettre une notification lorsqu'il est déterminé que la première unité de limitation (48) présente une anomalie.

9. Procédé de commande de machine de travail selon l'une des revendications 1 à 3, comprenant en outre l'étape suivante :
émettre une notification lorsque la deuxième unité de limitation (49) est en cours d'actionnement.

10. Programme de commande de machine de travail qui amène un ou plusieurs processeurs à exécuter le procédé de commande de machine de travail selon l'une des revendications 1 à 3.

11. Système de commande de machine de travail (1), comprenant :
un premier processeur de limitation (141) qui commande une première unité de limitation (48) qui limite un déplacement d'une unité d'entraînement (43, 44) qui entraîne une machine de travail (1) ;
**caractérisé en ce que** le système de commande de machine de travail comprend en outre :
un processeur de détermination (15) qui détermine si la première unité de limitation (48) présente ou non une anomalie ; et
un deuxième processeur de limitation qui commande une deuxième unité de limitation (49) qui limite le déplacement de l'unité d'entraînement (43, 44) séparément de la première unité de limitation (48), en se basant au moins en partie sur un résultat de détermination déterminant si la première unité de limitation (48) présente ou non une anomalie.

12. Machine de travail (3), comprenant :
le système de commande de machine de travail (1) selon la revendication 11 ; et
une carrosserie de machine sur laquelle est installée l'unité d'entraînement (43, 44).
